# FASCICULE DE BREVET EUROPEEN

(11) **EP 2 507 798 B1**
(45) Date de publication et mention de la délivrance du brevet: **06.05.2015**
(21) Numéro de dépôt: 10801611.4
(22) Date de dépôt: 30.11.2010
(51) Int. Cl.: F16L 9/14, G01M 3/04, G21C 17/00, G21C 17/025, G21C 17/017

(54) **CANALISATION TUBULAIRE POUR LE TRANSPORT DE SODIUM LIQUIDE**
ROHRLEITUNG FÜR DEN TRANSPORT VON FLÜSSIGNATRIUM
TUBULAR PIPE FOR TRANSPORTING LIQUID SODIUM

(30) Priorité: 30.11.2009 FR 0958515
(43) Date de publication de la demande: 10.10.2012
(73) Titulaire: AREVA, 92400 Courbevoie (FR)
(72) Inventeur: MOUSSAVI, Mehdi, F-75017 Paris (FR); AMBROSO, Annalisa, F-75015 Paris (FR)
(74) Mandataire: Jacobson, Claude
(86) Numéro de dépôt international: PCT/FR2010/052570
(87) Numéro de publication internationale: WO 2011/064516

(56) Documents cités:
- DE-C1- 3 821 111
- US-A- 3 721 970
- US-A- 4 112 417
- US-A- 4 332 170

## Description

La présente invention a trait au domaine du transport de sodium liquide dans des canalisations tubulaires. Elle concerne plus spécifiquement la détection de l'apparition de fissures dans de telles canalisations, en vue de déceler des risques de fuites de sodium hors des canalisations et d'inhiber de telles fuites.

Le sodium liquide, à savoir du sodium métallique porté au delà de sa température de fusion (97,8°C), est un fluide caloporteur et réfrigérant particulièrement efficace, qui présente une conductivité thermique supérieure d'un facteur 100 à celle de l'eau. Ce fluide caloporteur est utilisé pour assurer des transferts de chaleurs dans différents types de dispositifs mettant en oeuvre des échanges de chaleur, notamment dans certains moteurs ou dispositifs de refroidissement spécifiques.

Le sodium liquide trouve une application tout particulièrement intéressante dans le domaine de l'industrie nucléaire. En effet, en plus de ses excellentes propriétés de transfert de chaleur, qui permettent d'extraire une puissance volumique élevée, le sodium liquide présente la spécificité d'être transparent aux neutrons. En d'autres termes, le sodium liquide est non modérateur de neutrons, contrairement à d'autres fluides caloporteurs, tels que l'eau. Le sodium à l'état liquide constitue de ce fait un fluide caloporteur de choix dans le circuit primaire des réacteurs à neutrons rapides (RNR), et ce en particulier lorsqu'il est sous forme particulièrement pure (sodium raffiné dit "de qualité nucléaire", en particulier). Le sodium présente en outre l'avantage d'avoir un comportement intéressant vis-à-vis des radiations nucléaires, en particulier dans la mesure où les produits d'activation du sodium ayant un temps de demi-vie relativement court.

En contrepartie de ces avantages, le sodium liquide présente néanmoins l'inconvénient d'être hautement réactif, et ce d'autant plus qu'il est porté à haute température. En particulier, compte tenu de ses propriétés fortement réductrices, le sodium liquide s'enflamme lorsqu'il entre en contact de l'oxygène de l'air. D'autre part, lorsqu'il entre en contact avec l'eau, le sodium engendre de l'hydrogène, qui est propre à conduire à des réactions explosives. Les réactions du sodium avec l'eau ou l'oxygène conduisent en outre à la formation de produits corrosifs (oxyde ou hydroxyde de sodium notamment) qui sont susceptibles nuire à l'intégrité du dispositif où le sodium liquide est mis en oeuvre (en particulier les pièces en acier).

De ce fait, dans les dispositifs mettant en oeuvre une circulation de sodium liquide, il est primordial de détecter tout début de fuite de sodium, et ce le plus rapidement possible, de façon à pouvoir l'endiguer au plus vite et éviter des fuites massives de sodium liquide. Idéalement, il est souhaitable de pouvoir identifier plus en amont les risque de fuite pour être à même d'inhiber leur apparition de façon préventive.

Cette problématique est tout particulièrement sensible dans les réacteurs nucléaires de type RNR précipités, où le sodium à l'état liquide est porté à des températures très élevées (500 à 600°C typiquement), et où le circuit primaire est généralement mis en contact avec un circuit secondaire où le fluide caloporteur est de l'eau. Les fuites de sodium liquide dans de tels réacteurs peuvent avoir des conséquences dramatiques, comme l'illustre par exemple l'incendie qui a touché la centrale de Monju au Japon en 1995.

En vue de contrôler les risques liés à l'emploi du sodium, différents types de dispositifs de détection de fuite de sodium ont été développés, qui mettent en oeuvre des systèmes de détection du sodium ou de produits de réaction du sodium avec l'oxygène ou l'eau (H2 ou NaO en particulier) à la périphérie directe de la canalisation où le sodium liquide est véhiculé.

Dans ce cadre, il a notamment été décrit l'emploi de canalisations de transport de sodium liquide qui sont gainées par une canalisation extérieure, avec un espace entre la canalisation véhiculant le sodium et la canalisation extérieure muni de détecteurs de sodium ou de produits de réaction du sodium. Plus généralement, il a été proposé l'emploi de capteurs à la périphérie extérieure des canalisations véhiculant le sodium liquide pour détecter, lors d'une fuite, la production de sodium ou ses produits de réaction avec l'eau et/ou l'oxygène. Des capteurs de ce type sont notamment décrits dans JP 57200846 et JP 57200847.

Un capteur de type plus spécifique a été décrit dans le brevet US 4,112,417, qui a la forme d'un câble qu'on fixe sur la paroi extérieure d'une canalisation véhiculant du sodium liquide. Ce détecteur en forme de câble comprend une âme centrale métallique recouverte par une première couche isolante à base de d'un oxyde métallique (oxyde de magnésium, béryllium ou aluminium typiquement), qui est elle-même recouverte par une fine couche métallique externe, à base d'un métal corrodable par les produits de réaction du sodium de type oxyde ou hydroxyde de sodium (par exemple une couche de cuivre ou d'acier austénitique ou d'acier noir). En fonctionnement, une différence de potentiel est appliquée entre l'âme métallique et la couche métallique externe te le courant de fuite est mesuré. Lorsque du sodium fuit hors de la canalisation, les produits de réactions du sodium avec l'oxygène et l'eau atmosphérique se forment et attaquent la couche externe du câble, mettant partiellement à nu l'oxyde métallique de l'âme centrale du capteur, qui réagit à son tour avec les produits de réactions du sodium avec l'oxygène et l'eau atmosphérique, ce qui conduit à une diminution sensible de la résistance électrique de l'oxyde ce qui modifie le courant de fuite et permet la détection.

Afin de permettre une détection des fuites de sodium le plus rapidement possible dès leur apparition, des détecteurs de plus en plus sensibles ont été développés, en vue de pouvoir détecter les produits liés à la fuite en des quantités de plus en plus faibles et donc d'identifier leur présence dès le début de la fuite. Toutefois, la mise en oeuvre de détecteurs de ce type, aussi sensibles soient ils, ne s'avère pas pleinement satisfaisante. En effet, avec ces détecteurs, les fuites de sodium ne sont détectables qu'une fois qu'elles sont avérées et la détection ne permet pas une inhibition de la fuite avant son apparition.

Un but de la présente invention est de fournir des moyens de véhiculer du sodium liquide au sein d'une conduite tubulaire en évitant des fuites de sodium hors de la conduite et qui permettent, entre autres, de détecter des signes annonciateurs de risques de fuites de sodium avant qu'une telle fuite ne survienne de façon à permettre de mettre en oeuvre.

A cet effet, la présente invention fournit un nouveau type de canalisation tubulaire pour le transport de sodium liquide, qui est pourvu, sur sa surface interne, d'un revêtement spécifique, qui permet la détection de tout début de fissuration qui serait propre à conduire, si elle se développait, à une fuite de sodium hors de la conduite.

Plus précisément, la présente invention a pour objet une canalisation tubulaire pour le transport de sodium liquide, comprenant un corps de canalisation recouvert intérieurement par une couche interne, caractérisée en ce que ladite couche interne a une structure au moins bicouche comprenant :
- une première couche, céramique ou en métal ou alliage métallique, continue, destinée à être mise en contact avec le sodium liquide véhiculé par la canalisation tubulaire ; et
- entre le corps de canalisation et ladite première couche, une couche intermédiaire à base d'un matériau réactif qui se modifie lorsqu'il entre en contact avec du sodium liquide, de façon à se convertir en un matériau modifié ayant une conductivité électrique différente du matériau réactif.

La structure spécifique de la canalisation tubulaire selon la présente invention permet de véhiculer du sodium au sein de cette canalisation en étant capable de prévenir toute de sodium hors de la canalisation.

En effet, avec une canalisation tubulaire selon l'invention, tout processus propre à conduire *in fine* à une fuite de sodium hors de la canalisation passe par une destruction plus ou moins prononcée de la continuité de la couche céramique en contact avec le sodium fondu. Or, compte tenu de la structure de la couche interne présente dans la canalisation selon l'invention, la moindre fissuration de la couche céramique conduit à une mise en contact du sodium liquide avec le matériau réactif présent dans la couche intermédiaire, initialement isolée du sodium liquide par la couche céramique. Cette mise en contact du sodium avec la couche intermédiaire induit alors la conversion d'au moins une partie du matériau réactif en matériau modifié, ce qui modifie la conductivité globale de la canalisation tubulaire.

La mesure de la conductivité de la canalisation (directement ou par le biais de paramètres liés à cette conductivité) au cours du temps permet dès lors détecter tout phénomène susceptible de conduire à terme à une fuite de sodium, avant qu'une telle fuite survienne, ce qui permet d'intervenir de façon préventive sur la canalisation pour éviter tout risque de fuite de sodium, ce qui constitue un avantage notable par rapport aux techniques de détection de fuites de sodium avérées actuellement connues.

Dans ce cadre, selon un aspect particulier, la présente invention a pour objet un procédé de transport de sodium liquide permettant d'inhiber les risques de fuites de sodium, qui met en oeuvre une canalisation tubulaire pourvue d'une couche interne à structure bicouche telle que définie ci-dessus, et dans lequel :
- une mesure de la conductivité de la canalisation tubulaire est effectuée durant le temps où le sodium est véhiculé au sein de la canalisation ; et
- lorsqu'une variation de la conductivité est détectée, une maintenance préventive de la canalisation est opérée, de façon à écarter tout risque de fuite liée au phénomène détecté par la variation de conductivité.

La mesure de la conductivité opérée selon ce procédé peut être une mesure de conductivité globale de la conduite tubulaire sur l'ensemble de sa longueur. A cet effet, en règle générale, la paroi extérieure de la conduite tubulaire est munie de deux électrodes, une tension est appliquée aux bornes de ces deux électrodes et le courant circulant entre ces deux points est mesuré. De tels moyens de mesure de conductibilité permettent de détecter des variations de la conductibilité globale de la paroi, identifié lorsque le courant mesuré varie. Cette technique est simple à mettre en oeuvre, mais elle présente, néanmoins, l'inconvénient de ne pas fournir d'indication quant à la localisation exacte de la fissure. En outre, elle impose un contact direct entre les électrodes et la canalisation. En fait, la détection d'une variation de conductivité mesurée dans ce cadre reflète uniquement qu'il existe au moins une zone de la conduite où a eu lieu un phénomène propre à conduire à une fuite de sodium. La maintenance préventive à mettre en oeuvre concerne dans ce cas la totalité de la canalisation.

Selon un mode de réalisation plus intéressant, la mesure de la conductivité des parois de la conduite tubulaire est conduite de façon localisée, ce par quoi les zones où survient un phénomène propre à conduire à une fuite de sodium sont identifiées de façon plus précise, ce qui permet alors de cantonner les opérations de maintenance préventive de la conduite uniquement à ces zones localisées. Pour effectuer une mesure localisée de la conductivité des parois de la conduite tubulaire, on peut notamment mettre en oeuvre un ou plusieurs des moyens ci-après :
- une mesure de la conductivité de la conduite tubulaire par tronçons et non de façon globale, ce par quoi les opérations de maintenance préventives sont limitées aux tronçons où une modification est mesurée. Dans ce cadre, la mesure de conductivité par tronçon est typiquement réalisée en munissant la conduite tubulaire de plusieurs électrodes permettant plusieurs points de mesure. Ces différents points de mesure peuvent être effectués sur une même conduite tubulaire d'un seul tenant ou bien au niveau de points susceptibles d'être fragilisés, en particulier de part et d'autre des coudes, de croisements ou de raccords. La mesure de la conductivité par tronçon est typiquement réalisée en entourant le tronçon de structure tubulaire avec un dispositif formé par deux boucles de courant induisant un champ magnétique uniforme dont les lignes de champ sont, typiquement, alignées avec l'axe de la conduite tubulaire. La modification de la conductivité de la conduite tubulaire associée à l'apparition d'une fissure créée une perturbation des ondes magnétiques qui peut être détectée à l'aide de ce type de dispositif. A cet effet, un détecteur (ou un collier de détecteurs, assurant une détection de la perturbation du champ magnétique, peut par exemple être disposée autour de la structure tubulaire, notamment au niveau d'une section, pour mesurer l'intégrale du champ magnétique uniquement sur un secteur angulaire de la section, ou sur la totalité de la section. Une variation dans la réponse d'un des détecteurs ainsi localisés autour de la structure tubulaire permet d'identifier une variation de la conductivité du milieu dans la zone couverte par le détecteur, permettant ainsi d'identifier, de façon localisée, l'apparition d'une fissure. Typiquement, plusieurs détecteurs peuvent être alignés sur la longueur de la conduite tubulaire, de façon à permettre une détection efficace des perturbations du champ magnétique à différents niveaux de ladite conduite.
- une mesure de conductivité locale par mesure électromagnétique dans le domaine des basses fréquences (typiquement inférieures à 10 kHz) qui permet de localiser les fissures en cours de formation en faisant circuler un courant dans les parois de la canalisation et en détectant les anomalie de champ magnétique à l'aide d'un capteur magnétique, selon une méthode connue en soi, par exemple selon la méthode CRABE, décrite par exemple dans « Détection de fissure sur structure en mer en présence de salissure marine » - Projet CRABE Ifremer ; Actes de Colloques, Colloque ISM 90, N° 12-1991.

Pour obtenir les effets précités, le matériau réactif employé dans la couche intermédiaire des canalisations selon la présente invention peut varier en une assez large mesure. Dans ce cadre, la couche intermédiaire présente dans la couche interne d'une canalisation tubulaire selon l'invention peut comprendre un seul type de matériau réactif, ou bien, selon un autre mode de réalisation, un mélange de plusieurs matériaux réactifs distincts.

Typiquement, le matériau réactif présent dans la couche intermédiaire comprend au moins un composé qui réagit avec le sodium liquide pour former un matériau modifié (généralement solide) ayant une conductivité électrique différente de celle du composé solide avant réaction avec le sodium liquide.

Selon un mode de réalisation compatible avec le précédent, le matériau réactif présent dans la couche intermédiaire peut également comprendre un mélange de plusieurs composés, avantageusement solides, qui réagissent entre eux lorsqu'ils sont mis en présence de sodium liquide pour former un matériau modifié ayant une conductivité électrique différente de celle du mélange de composés initial.

Selon un mode intéressant, le matériau réactif présent dans la couche intermédiaire comprend une céramique conductrice de type *Lisicon* ou un mélange de composés capables de former une céramique conductrice de type *Lisicon* lorsqu'ils sont mis en contact avec du sodium liquide. Avantageusement, la couche intermédiaire est entièrement constituée par une céramique *Lisicon* ou par un mélange de composés capables de former une céramique de type Nasicon au contact de sodium liquide.

Les céramiques dites Lisicon et *Nasicon* (acronymes venant respectivement de l'anglais « *Lithium Super Ionic Conductor »* et *"Natrium Super Ionic Conductor*") sont des céramiques à base de sodium de zirconium et de zinc contenant des proportions variables de phosphate et de silicates, et qui répondent typiquement aux formules générales respectives Li₁₊ₓZr₂SiₓP₃₋ₓO₁₂ et Na₁₊ₓZr₂SiₓP₃₋ₓO₁₂, avec 0≤x<3. Pour plus de détails concernant ces céramiques et leur préparation, on pourra notamment se reporter à l'article *"*Nasicon Solid electrolytes", dans Materials Research Bulletin, vol 21, n°3, pp 357-363 (1986).

Selon une première variante intéressante, le matériau réactif présent dans la couche intermédiaire comprend une céramique de type *Lisicon* contenant des phosphates, à savoir une céramique conductrice répondant à la formule Li₁₊ₓZr₂SiₓP₃₋ₓO₁₂ ou Na₁₊ₓZr₂SiₓP₃₋ₓO₁₂, où 0≤x<3, x étant plus préférentiellement inférieur à 3, voire à 2. Avantageusement, la couche intermédiaire est constituée par une telle céramique *Lisicon* contenant des phosphates. Une céramique de type *Lisicon* contenant des phosphates, notamment de type précité a les mêmes propriétés de conduction et est convertie en *Nasicon,* de meilleure conductivité, par remplacement d'au moins une partie des atomes de lithium par des atomes de sodium, typiquement, pour conduire à un *Nasicon* de formule Na₁₊ₓZr₂SiₓP₃₋ₓO₁₂, selon le mécanisme décrit notamment dans Materials Science Poland, vol 454, n° 1 (2006*).* Dès lors, lorsqu'une telle céramique de type *Lisicon* est mise en oeuvre à titre de matériau réactif dans une canalisation selon l'invention et que la couche céramique en contact avec le sodium liquide véhiculé par la canalisation se fissure, il en résulte une augmentation sensible de conductivité des parois de la canalisation, qui peuvent aisément être détectés.

En outre, il s'avère que la réaction du sodium avec une céramique de type *Lisicon* contenant du phosphate du type précité conduit conjointement à un autre effet particulièrement intéressant. En effet, la réaction qui conduit à l'augmentation de conductivité de la couche intermédiaire s'accompagne d'une augmentation de volume de cette couche intermédiaire. Cette augmentation de volume a pour effet de colmater, au moins provisoirement, la fissuration de la couche Cet effet de colmatage local de la fissure retarde, voire inhibe, la formation d'une fuite de sodium liquide à l'extérieur de la canalisation à partir de la fissure formée. Ainsi, la mise en oeuvre d'une céramique *Lisicon* contenant des phosphate dans la couche intermédiaire permet non seulement une détection de phénomènes potentiellement source de fuite de sodium, mais également une inhibition au moins temporaire, de l'apparition concrète d'une fuite de sodium, ce qui permet de disposer de davantage de temps pour assurer la maintenance de la canalisation où un risque de fuite est détecté.

Des céramiques *Lisicon* contenant des phosphates qui sont particulièrement bien adaptées à la mise en oeuvre de cette première variante de l'invention sont notamment les céramiques répondant aux formules suivantes : LiZr₂(P0₄)₃, Li₃Zr₂Si₂P0₁₂

Des céramiques de Formule Li₁₄Zr(GeO₄)₄ s'avèrent également intéressantes.

Selon une autre variante alternative de l'invention, le matériau réactif présent dans la couche intermédiaire comprend un mélange de composés précurseurs d'une céramique de type Nasicon contenant des silicates, qui forme une telle céramique lorsqu'il est mis en contact avec du sodium liquide. Plus précisément, selon cette variante, la couche intermédiaire comprend, en mélange, de la zircone ZrO₂, de la silice SiO₂, et de préférence un sel de phosphate, notamment un phosphate d'ammonium, par exemple NH₄PO₄.3H₂O.

De préférence, selon cette variante, le rapport molaire Si/Zr au sein du mélange est compris entre 1,5 et 3 par exemple et peut-être 1,5 et 2,5, ce rapport étant de préférence d'au moins 1,8.

Au contact de sodium liquide, le mélange de composés forme un matériau modifié, à savoir une céramique conductrice de type *Nasicon* comprenant un silicate, de conductivité nettement plus élevée que le mélange de sel de zirconium et de silice initial. Là encore, la variation observée permet une détection nette des phénomènes de fissuration. Selon cette variante, la couche intermédiaire est avantageusement entièrement constituée par un mélange intime de composés précurseurs de céramique *Nasicon* du type précité.

Selon un mode de réalisation, la couche intermédiaire est entièrement constituée d'un mélange de zircone ZrO₂, de silice SiO₂, et optionnellement d'un sel de phosphate, à l'exclusion d'autres composés.

Selon un autre mode de réalisation intéressant, le matériau réactif présent dans la couche intermédiaire comprend, en plus de la zircone ZrO₂, de la silice SiO₂, et du sel de phosphate, un carbonate de lithium LiHCO₃. Dans ce cas, la présence du sel de phosphate est le plus souvent requise. Dans ce cas, le mélange de composés tend à se transformer, en tout ou partie, au cours du temps en une céramique de type *Lisicon* au phosphate. Cette céramique de type *Lisicon* alors présente au sein de la couche intermédiaire forme au contact du sodium liquide une céramique de type *Nasicon,* selon le mécanisme décrit dans le cadre de la première variante, ce qui permet, là encore d'assurer une détection nette des phénomènes de fissuration.

En outre, quel que soit le mode de réalisation de la deuxième variante, la réaction du mélange de sel de zinc et de silice présent au sein de la couche intermédiaire avec le sodium liquide s'accompagne, comme dans la variante précédente, d'un phénomène de gonflement de la couche intermédiaire, ce qui permet, comme dans la variante précédente un effet de colmatage au moins temporaire des fissures en cours de formation. Ainsi, là encore, en plus d'une détection des phénomènes de fissuration susceptibles de conduire à terme à une fuite de sodium liquide, la mise en oeuvre du matériau réactif de la couche intermédiaire permet de retarder, voire d'empêcher, la formation de la fuite, ce qui fournit un délai supplémentaire pour assurer une maintenance de la canalisation.

Selon des modes de réalisation préférentiels de l'invention, la canalisation tubulaire pour le transport de sodium liquide peut avantageusement présenter une ou plusieurs des caractéristiques préférentielles ci-après.

Dans une canalisation selon l'invention, la couche intermédiaire à base de matériau réactif présente dans la couche interne est avantageusement une couche continue, ayant de préférence une épaisseur constante, cette épaisseur étant de préférence d'au moins 50 nm, par exemple comprise entre 100 et 500 nm, et plus préférentiellement entre 150 et 250 nm.

Typiquement, la couche intermédiaire présente dans la couche interne des canalisations selon l'invention peut être obtenue par dépôt du ou des matériaux formant le matériau réactif constitutif de la couche interne sur la surface interne du corps de la canalisation, typiquement par dépôt du matériau réactif sous la forme d'un film comprenant le matériau réactif (ou un précurseur de celui-ci) à l'état solubilisé ou dispersé (par imprégnation, trempage ou pulvérisation, par exemple) puis séchage ou traitement thermique. Le dépôt de la couche intermédiaire peut également être effectué par électrodéposition ou bien par des techniques de type sol-gel, par exemple selon les techniques décrites dans US 6,911,280

Plus spécifiquement, les couches internes à base de céramique *Lisicon et Nasicon* du type précité peuvent typiquement être obtenues selon la technique décrite dans WO2008/015593.

Par ailleurs, dans une canalisation selon l'invention, la couche, céramique ou à base de métal ou d'alliage métallique, continue, qui est destinée à être mise en contact avec le sodium liquide véhiculé par la canalisation tubulaire (à savoir la couche qui revêt la couche intermédiaire) a une épaisseur préférentiellement constante, cette épaisseur étant, de façon avantageuse, comprise entre 50 et 500 nm, par exemple entre 100 et 300 nm et plus préférentiellement entre 150 et 250nm.

Cette couche continue, qui recouvre la couche de intermédiaire, peut typiquement être une couche céramique, qui peut être déposée selon toute technique connue en soi. Alternativement, il peut s'agir d'une couche métallique ou polymétallique, par exemple une couche de nickel monocristallin déposée selon la technique dite Electrosleeve®, décrite par exemple dans l'article « In-situ nuclear steam generator repair using electrodeposited nanocrystalline nickel » de G. Palumboa, F. Gonzaleza, A.M. Brennenstuhla, U. Erba, b, W. Shmaydaa et P.C. Lichtenbergera

Le corps de la canalisation selon la présente invention peut être à base de tout matériau adapté au transport de sodium liquide. Typiquement, ce corps de canalisation peut être en inox, zircalloy ou en acier.

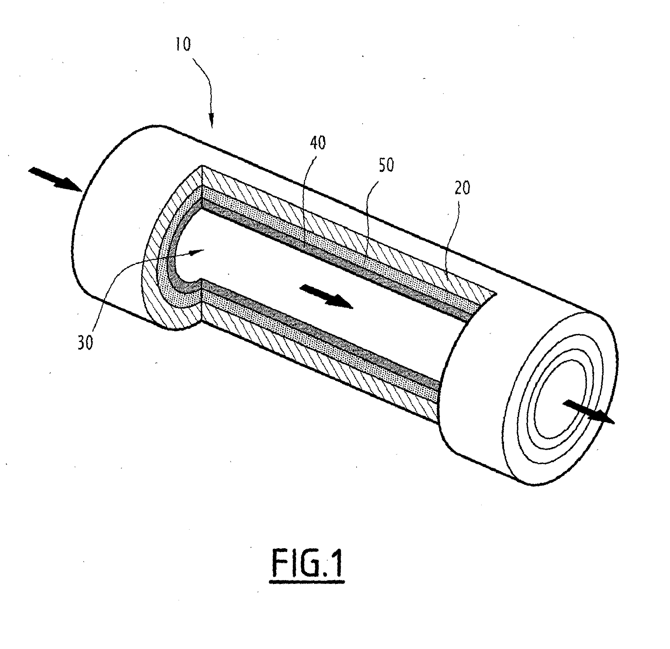

L'invention sera encore davantage illustrée au vu de la figure ci jointe, qui est une représentation schématique en coupe d'une canalisation tubulaire selon l'invention.

Sur cette figure, il est représenté une canalisation 10, qui comprend un corps de canalisation 20 (typiquement en acier). Au sein de l'espace interne 30 de ce corps de canalisation 20, du sodium liquide est véhiculé.

Le corps de canalisation 20 est revêtu par une couche interne continue constituée par deux couches continues 40 et 50, à savoir :
- une couche 40 en contact avec le sodium liquide et qui est typiquement une couche de céramique ou bien une couche de nickel déposée par la technique Electrosleeve® ; et
- une couche intermédiaire 50 localisée entre le corps de canalisation 20 et la couche céramique 40. Cette couche comprend (et typiquement est constituée par un matériau réactif qui, au contact du sodium, est converti en un matériau modifié de conductivité différente de celle du matériau réactif.

Lorsqu'en cours de fonctionnement, il apparaît un début de fissure au niveau de la canalisation, une ou plusieurs fissures se créent au niveau de la couche céramique 40, ce qui met le sodium liquide présent dans l'espace interne 30 de la canalisation en contact avec le matériau réactif de la couche 40.

Il s'ensuit une modification de la conductivité des parois du réacteur qui peut être aisément détecté au moyens des techniques décrites plus haut (les électrodes ou capteurs magnétiques utiles à cet effet ne sont pas représentés sur la figure).

En outre, dans le cas où le matériau réactif de la couche 40 est une céramique *Lisicon* contenant des phosphate ou bien un mélange de composés précurseurs de *Nasicon* du type précité, la mise en contact du sodium avec la couche 40 permet de colmater, au moins de façon provisoire les fissures qui peuvent s'être formées au sein de cette couche. Ce processus conduit donc, schématiquement, à une "auto-réparation" provisoire ou durable, de la couche interne de la canalisation, qui permet de maintenir une résistance mécanique suffisante de cette couche au moins pendant une durée suffisante pour permettre une maintenance préventive de la canalisation, de façon à écarter tout risque de fuite liée au phénomène détecté par la variation de conductivité.

## Revendications

1. Canalisation tubulaire (10) pour le transport de sodium liquide, comprenant un corps de canalisation (20) recouvert intérieurement par une couche interne, ladite couche interne a une structure au moins bicouche comprenant :
- une première couche (40) céramique ou métal ou en alliage métallique, continue, destinée à être mise en contact avec le sodium liquide véhiculé par la canalisation tubulaire (10) ; et
- une couche intermédiaire (50) entre le corps de canalisation (20) et ladite première couche (40) ;
**caractérisée en ce que**
ladite couche intermédiaire (50) est à base d'un matériau réactif qui se modifie lorsqu'il entre en contact avec du sodium liquide, de façon à se convertir en un matériau modifié ayant une conductivité électrique différente du matériau réactif, de sorte que la mesure de la conductivité de la canalisation au cours du temps permette de détecter tout phénomène susceptible de conduire à terme à une fuite de sodium, avant qu'une telle fuite ne survienne.

2. Canalisation selon la revendication 1, où le matériau réactif présent dans la couche intermédiaire (50) comprend une céramique conductrice répondant à la formule suivante :
Li₁₊ₓZr₂SiₓP₃₋ₓO₁₂,
où 0≤x<3.

3. Canalisation selon la revendication 2, où la couche intermédiaire (50) est constituée par ladite céramique conductrice.

4. Canalisation selon la revendication 1, où le matériau réactif présent dans la couche intermédiaire (50) comprend, en mélange, de la zircone ZrO₂, de la silice SiO₂, et de préférence un sel de phosphate.

5. Canalisation selon la revendication 4, où le matériau réactif présent dans la couche intermédiaire (50) comprend un mélange de zircone ZrO₂, de silice SiO₂, d'un sel de phosphate et de LiHCO₃.

6. Canalisation selon la revendication 4 ou 5, où le rapport molaire Si/Zr au sein du mélange est compris entre 1,5 et 3.

7. Canalisation selon l'une des revendications 1 à 6, où la couche intermédiaire (50) à base de matériau réactif est une couche continue, ayant une épaisseur d'au moins 50 nm.

8. Canalisation selon l'une des revendications 1 à 7, où la première couche (40) continue qui est destinée à être mise en contact avec le sodium liquide véhiculé par la canalisation tubulaire a une épaisseur comprise entre 50 et 500 nm.

9. Procédé de transport de sodium liquide permettant d'inhiber les risques de fuites de sodium, ledit procédé mettant en oeuvre une canalisation tubulaire (10) selon l'une des revendications 1 à 8, et dans lequel :
- une mesure de la conductivité électrique de la canalisation tubulaire est effectuée durant le temps où le sodium est véhiculé au sein de la canalisation ; et
- lorsqu'une variation de la conductivité électrique est détectée, une maintenance préventive de la canalisation est opérée, de façon à écarter tout risque de fuite liée au phénomène détecté par la variation de conductivité.

## Patentansprüche

1. Rohrleitung (10) für den Transport von flüssigem Natrium, einen Leitungskörper (20) umfassend, der inwendig mit einer Innenschicht bedeckt ist, wobei die Innenschicht einen zumindest zweischichtigen Aufbau hat, der umfasst:
- eine erste durchgehende Schicht (40) aus Keramik oder Metall oder einer Metalllegierung, die dazu bestimmt ist, mit dem flüssigen Natrium in Kontakt gebracht zu werden, das mittels der Rohrleitung (10) transportiert wird; und
- eine Zwischenschicht (50) zwischen dem Leitungskörper (20) und der ersten Schicht (40);
**dadurch gekennzeichnet, dass**
die Zwischenschicht (50) auf Basis eines reaktiven Materials ist, das sich verändert, wenn es mit dem flüssigen Natrium in Kontakt tritt, um sich in ein modifiziertes Material zu verwandeln, das eine vom reaktiven Material verschiedene elektrische Leitfähigkeit hat, so dass es der Messwert der Leitfähigkeit der Leitung im Verlauf der Zeit ermöglicht, jedes Phänomen, das früher oder später zu einem Austreten von Natrium führen kann, zu entdecken, bevor ein solches Austreten stattfindet,.

2. Leitung nach Anspruch 1, wobei das reaktive Material, das in der Zwischenschicht (50) vorhanden ist, eine leitfähige Keramik umfasst, die der folgenden Formel entspricht:
Li₁₊ₓZr₂SiₓP₃₋ₓO₁₂,
wobei 0≤x<3 ist.

3. Leitung nach Anspruch 2, wobei die Zwischenschicht (50) aus der leitfähigen Keramik besteht.

4. Leitung nach Anspruch 1, wobei das reaktive Material, das in der Zwischenschicht (50) vorhanden ist, im Gemisch Zirkon ZrO₂, Siliciumoxid SiO₂ und vorzugsweise ein Phosphatsalz umfasst.

5. Leitung nach Anspruch 4, wobei das reaktive Material, das in der Zwischenschicht (50) vorhanden ist, ein Gemisch aus Zirkon ZrO₂, Siliciumoxid SiO₂ und einem Phosphat- und LiHCO₃-Salz umfasst.

6. Leitung nach Anspruch 4 oder 5, wobei das Molverhältnis Si/Zr im Gemisch zwischen 1,5 und 3 beträgt.

7. Leitung nach einem der Ansprüche 1 bis 6, wobei die Zwischenschicht (50) auf Basis des reaktiven Materials eine durchgehende Schicht ist, die eine Dicke von mindestens 50 nm hat.

8. Leitung nach einem der Ansprüche 1 bis 7, wobei die erste durchgehende Schicht (40), die dazu bestimmt ist, mit dem flüssigen Natrium in Kontakt gebracht zu werden, das mittels der Rohrleitung transportiert wird, eine Dicke zwischen 50 und 500 nm hat.

9. Verfahren zum Transport von flüssigem Natrium, das es ermöglicht, die Gefahren eines Austretens von Natrium zu verhindern, wobei das Verfahren eine Rohrleitung (10) nach einem der Ansprüche 1 bis 8 einsetzt, und bei dem:
- eine Messung der elektrischen Leitfähigkeit der Rohrleitung während der Zeit durchgeführt wird, in der das Natrium in der Rohrleitung transportiert wird; und
- wenn eine Veränderung der elektrischen Leitfähigkeit entdeckt wird, eine präventive Wartung der Leitung vorgenommen wird, um jede Austrittsgefahr, die mit dem durch die Veränderung der Leitfähigkeit entdeckten Phänomen verbunden ist, auszuschließen.

## Claims

1. A tubular pipe (10) for transporting liquid sodium, comprising a pipe body (20) coated on the inside with an inner layer, **characterized in that** the said inner layer has a structure at least of bi-layer structure comprising:
- a first continuous layer (40) in ceramic or metal or metal alloy intended to be in contact with the liquid sodium transported by the tubular pipe (10); and
- between the pipe body (20) and said first layer (40), an intermediate layer (50) in a reactive material which is modified when it comes into contact with liquid sodium, so that it converts to a modified material having different electric conductivity to the reactive material.

2. The pipe according to claim 1, wherein the reactive material present in the intermediate layer (50) comprises a conductive ceramic meeting the following formula:
Li₁₊ₓZr₂SiₓP₃₋ₓO₁₂,
where 0≤x<3.

3. The pipe according to claim 2 wherein the intermediate layer (50) is formed of said conductive ceramic.

4. The pipe according to claim 1 wherein the reactive material present in the intermediate layer (50) comprises, in a mixture, zirconium ZrO₂, silica SiO₂, and preferably a phosphate salt.

5. The pipe according to claim 4 wherein the reactive material present in the intermediate layer (50) comprises a mixture of zirconium ZrO₂, silica SiO₂, a phosphate salt and LiHCO₃.

6. The pipe according to claim 4 or 5 wherein the Si/Zr molar ratio in the mixture is between 1.5 and 3.

7. The pipe according to one of claims 1 to 6 wherein the intermediate layer (50) in reactive material is a continuous layer having a thickness of at least 50 nm.

8. The pipe according to one of claims 1 to 7 wherein the continuous ceramic layer (40) intended to be in contact with the liquid sodium conveyed by the tubular pipe has a thickness of between 50 and 500 nm.

9. A method for transporting liquid sodium allowing the inhibition of risks of sodium leaks, the said method using a tubular pipe (10) according to one of claims 1 to 8, and wherein:
- measurement of the conductivity of the tubular pipe is taken during the time the sodium is conveyed inside the pipe; and
- when a variation in conductivity is detected, preventive maintenance on the pipe is carried out so as to eliminate any risk of leak related to the phenomenon detected by the variation in conductivity.
